# EUROPÄISCHE PATENTSCHRIFT

(11) **EP 1 342 056 B1**
(45) Veröffentlichungstag und Bekanntmachung des Hinweises auf die Patenterteilung: **29.12.2004**
(21) Anmeldenummer: 01992871.2
(22) Anmeldetag: 25.10.2001
(51) Int. Cl.: G01C 21/36

(54) **VERFAHREN ZUR BEEINFLUSSUNG EINER FAHRTROUTENFÜHRUNG**
METHOD FOR INFLUENCING ROUTE GUIDANCE
PROCEDE POUR INFLUENCER UNE CONDUITE D'ITINERAIRE

(30) Priorität: 31.10.2000 DE 10053873
(43) Veröffentlichungstag der Anmeldung: 10.09.2003
(73) Patentinhaber: ROBERT BOSCH GMBH, 70442 Stuttgart (DE)
(72) Erfinder: SCHOLZ, Matthias, 31141 Hildesheim (DE); DUCKECK, Ralf, 31137 Hildesheim (DE)
(86) Internationale Anmeldenummer: PCT/DE2001/004046
(87) Internationale Veröffentlichungsnummer: WO 2002/037057

(56) Entgegenhaltungen:
- EP-A- 0 777 206
- DE-A- 4 139 581
- US-A- 5 550 538
- US-A- 5 659 476

## Beschreibung

### Stand der Technik

Die Erfindung geht aus von einem Verfahren nach der Gattung des Hauptanspruchs. Es sind schon Navigationsvorrichtungen in Fahrzeugen bekannt, die nach Eingabe eines Fahrziels eine aktuelle Position des Fahrzeugs ermitteln und unter Zugriff auf eine in einem Speicher abgelegte digitale Karte eines Straßen- und Wegenetzes eine kürzeste und/oder schnellste Fahrtroute von der aktuellen Fahrzeugposition zu dem Fahrziel berechnen. Während des Befahrens der berechneten Fahrtroute können jedoch aktuelle Ereignisse, z.B. ein Verkehrsstau oder Straßenarbeiten, ein Befahren der berechneten Fahrtroute erschweren oder sogar unmöglich machen. Hierbei ist bekannt, dass die Navigationsvorrichtung unter Ausnutzung von über Funk empfangenen Verkehrsinformationen eine Umfahrung des Verkehrsstaus bzw. der Straßenarbeiten berechnet. Hierzu muss die Navigationsvorrichtung für den Empfang von Daten eines Telematiksystems oder für die Auswertung von Verkehrsfunkinformationen ausgerüstet sein. Zudem können nur solche Informationen berücksichtigt werden, die von einer Datenzentrale des Telematikdienstes bzw. von einer Verkehrsfunkzentrale bereits erfasst sind. Weiterhin ist bekannt, manuell einen Umfahrungswunsch in eine Navigationsvorrichtung einzugeben, so dass eine Fahrtroute berechnet werden kann, die um das auf der zuvor berechneten Fahrtroute liegende Hindernis herumführt. Wird bei herkömmlichen Navigationsvorrichtungen die berechnete Fahrtroute nicht manuell geändert, versucht die Navigationsvorrichtung den Fahrer automatisch, z.B. durch die Ausgabe eines akustischen Hinweises "Bitte wenden", auf die ursprüngliche berechnete Fahrtroute zurückzuführen.

Aus der US 5,659,476 ist ein Verfahren nach dem Oberbegriff des Anspruchs 1 bekannt. Bei einer Navigationsvorrichtung wird automatisch eine Umfahrungsstrecke für gesperrte Segmente einer ursprünglich berechneten Route erstellt, wenn ein Verlassen der zuvor berechneten Fahrtroute erfasst wird.

Aus der EP 777 206 A 1 ist eine Fahrzeugnavigationsvorrichtung bekannt, bei der ein Fahrzeug zu einer ursprünglichen Fahrtroute zurück geführt wird, wenn ein Verlassen der Fahrtroute erfasst wird.

Aus der US 5,550,538 ist ein Navigationssystem bekannt, das im voraus eine optimale Route berechnet und ein Verlassen dieser Fahrtroute erfasst. Es wird eine Fahrtroute zum Zurückführen auf die ursprüngliche Fahrtroute berechnet.

### Vorteile der Erfindung

Das erfindungsgemäße Verfahren mit den Merkmalen des Hauptanspruchs hat demgegenüber den Vorteil, dass ein Verlassen einer berechneten Fahrtroute erfasst wird, im Anschluß automatisch ein zu meidender Streckenabschnitt der berechneten Fahrtroute festgelegt wird und unmittelbar, ohne das weitere Benutzereingaben erforderlich werden, eine neue Fahrtroute für eine Umfahrung des zu meidenden Streckenabschnitts berechnet wird. Erkennt z.B. ein Autofahrer einen vor ihm liegenden Verkehrsstau, so kann er die Autobahn verlassen und wird, ohne dass von ihm weitere Benutzereingaben erforderlich sind, frühestens wieder an der nächsten Anschlussstelle auf die Autobahn geführt. Hierbei wird nicht sofort versucht, den Fahrer direkt wieder auf die Autobahn zurückzuführen, also auf die zuvor berechnete Fahrtroute, sondern dem Fahrer werden Hinweise gegeben, die auf einer alternativen Fahrtroute zumindest grob in Richtung auf sein Fahrziel führen. Insbesondere wird hierdurch die Ausgabe von Hinweisen zur Rückkehr auf die ursprüngliche Fahrtroute vermieden, die einen Fahrer irritieren, zumal da im Bereich z.B. einer Autobahnabfahrt der Fahrer im allgemeinen keine Haltemöglichkeit vorfindet und damit auch keine Möglichkeit hat, die Navigationsvorrichtung in seinem Fahrzeug umzuprogrammieren. Eine optimale Führung eines Fahrzeugs kann damit auch dann erfolgen, wenn zur Rückführung auf die ursprüngliche Fahrtroute Verkehrsstörungen von einer Telematik- und/oder Verkehrsfunkzentrale noch nicht erfasst wurden oder wenn kein Funkkontakt zu einer solchen Zentrale möglich ist.

Erfindungsgemäß ist es vorteilhaft, ein Verlassen der berechneten Fahrtroute durch eine Auswertung der Betätigung einer Richtungsanzeige des Fahrzeugs zu ermitteln, da hierdurch schon vor Verlassen der Fahrtroute erkennbar ist, ob ein Fahrer der Fahranweisung folgt, z.B. also ob der Fahrer entsprechend einer Anweisung rechts abzubiegen auch wirklich rechts abbiegt, oder ob der Fahrer beabsichtigt, eine andere Richtung zu wählen. Hierdurch kann ein Fahrer zusätzlich an ein Setzen der Richtungsanzeige erinnert werden, sollte er dies vergessen haben.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, ein Verlassen der berechneten Fahrtroute durch einen Vergleich der Fahrzeugposition mit der berechneten Fahrtroute zu ermitteln, da hierdurch sofort eine Abweichung von der berechneten Fahrtroute erfasst wird.

Weiterhin ist vorteilhaft, zu überprüfen, ob ein unabsichtliches Verlassen der berechneten Fahrtroute erfolgt. Sollte ein Fahrer z.B. durch die Wahl einer falschen Fahrspur oder durch ein falsches Abbiegen unfreiwillig die berechnete Fahrtroute verlassen haben, so wird er im Falle eines unabsichtlichen Verlassens der Fahrtroute automatisch wieder auf die berechnete Fahrtroute zurückgeführt. Hat er die Fahrtroute jedoch absichtlich verlassen, so wird automatisch ein zu meidender Streckenabschnitt festgelegt und eine Umfahrung für diesen Streckenabschnitt berechnet. Weiterhin ist vorteilhaft, dass bei einem Verlassen der Fahrtroute eine optische und/oder akustische Warnung ausgegeben wird, so dass der Fahrer über das Verlassen der Fahrtroute informiert wird und gegebenenfalls seine fehlende Absicht z.B. durch einen Tastendruck angeben kann.

Weiterhin ist vorteilhaft, nach einer Erfassung eines absichtlichen Verlassens der Fahrtroute einen Hinweis zur Rückkehr auf die zuvor berechnete Fahrtroute zu deaktivieren oder zumindest solange zu verzögern, bis eine Umfahrung des zu meidenden Streckenabschnitts berechnet wird. Hierdurch kann eine Irritation des Fahrers, z.B. durch die Ausgabe eines Hinweises "Bitte wenden", vermieden werden.

Weiterhin ist vorteilhaft, dass bei der Berechnung der Umfahrung des zu meidenden Streckenabschnitts ausgeschilderte Umfahrungsstrecken, z.B. in Deutschland die mit dem Buchstaben "U" und einer Nummer gekennzeichneten Umfahrungstrecken zwischen einzelnen Autobahnanschlussstellen, gemieden werden, da im Falle eines Verkehrsstaus ein Großteil der Fahrzeuge sich an diesen Hinweisen orientiert und damit die Umfahrungsstrecken stark mit Verkehr belastet werden. Insbesondere ist vorteilhaft, dass die Streckenwiderstände für diese ausgeschilderten Umfahrungsstrecken bei der Berechnung der Umfahrung des zu meidenden Streckenabschnitts erhöht werden.

Weiterhin ist vorteilhaft, dass das Fahrzeug wieder auf die berechnete Route geführt wird, wenn eine Korrektur eines absichtlichen Verlassens der berechneten Fahrtroute erfasst wird und die berechnete Fahrtroute folglich nur unabsichtlich verlassen wurde. Hierdurch ist eine problemlose Rückkehr des Fahrzeugs auf die zuvor berechnete Fahrtroute möglich.

### Zeichnung

Ausführungsbeispiele der Erfindung sind in der Zeichnung dargestellt und in den nachfolgenden Beschreibungen näher erläutert. Es zeigen:

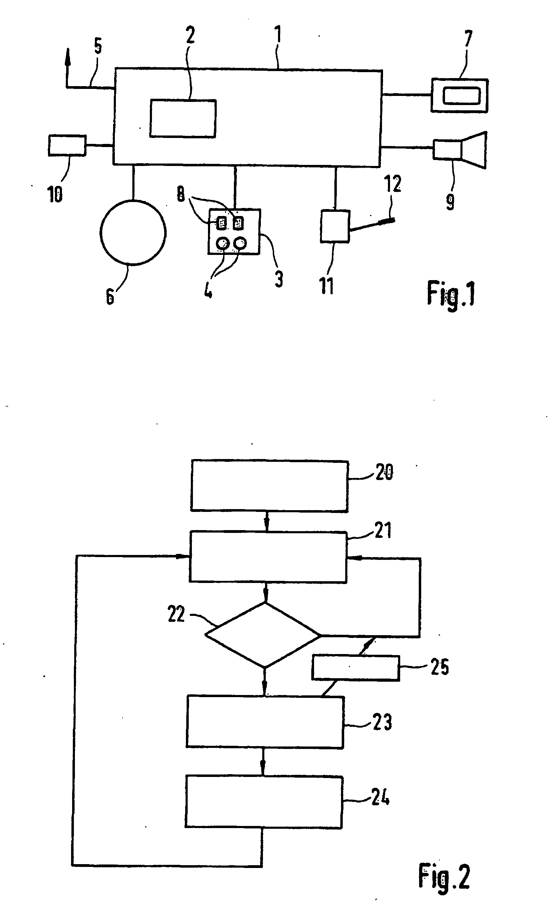

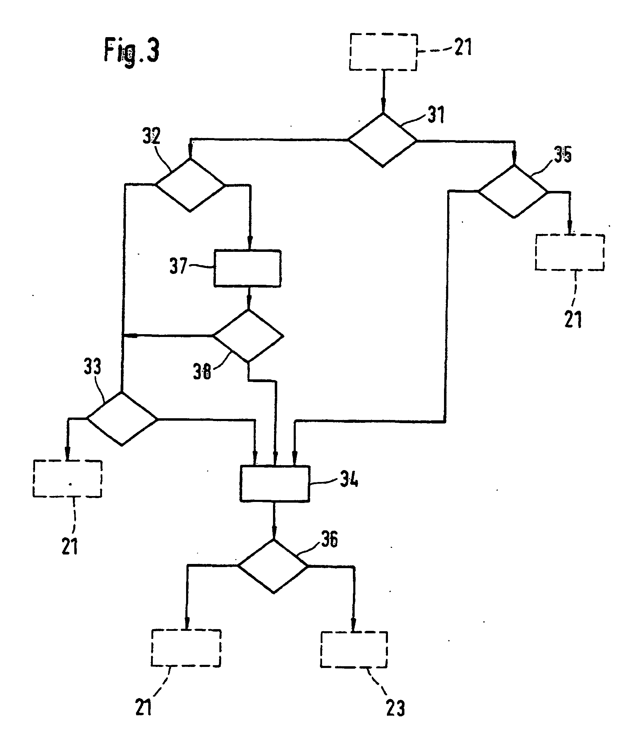

Figur 1 eine erfindungsgemäße Navigationsvorrichtung in einem Fahrzeug zur Durchführung des erfindungsgemäßen Verfahrens, Figur 2 einen ersten erfindungsgemäßen Verfahrensablauf, Figur 3 ein weiteres Ausführungsbeispiel für einen Teil des erfindungsgemäßen Verfahrensabaufs gemäß Figur 2.

### Beschreibung des Ausführungsbeispiels

Das erfindungsgemäße Verfahren findet insbesondere Anwendung für Navigationsvorrichtungen in Kraftfahrzeugen, wie Personenkraftfahrzeuge, Busse oder Lastkraftwagen. Eine Navigationsvorrichtung ist in dem Fahrzeug angeordnet und kann in einer bevorzugten Ausführungsform eine Dienstzentrale über eine Funkverbindung kontaktieren. In der Figur 1 ist eine Navigationsvorrichtung 1 mit einer Recheneinheit 2 dargestellt. In die Navigationsvorrichtung 1 wird mittels einer Eingabeeinheit 3, an der Drucktasten 8 und/oder Drehknöpfe 4 angeordnet sind, ein Fahrziel eingegeben. Mit einem GPS-Empfänger 5 (GPS = Global Positioning System) ermittelt die Navigationsvorrichtung 1 eine aktuelle Position des Fahrzeugs, und die Recheneinheit 2 bestimmt unter Zugriff auf eine in einer Speichereinheit 6 abgelegte digitale Karte eine Fahrtroute von der aktuellen Fahrzeugposition zu dem über die Eingabeeinheit 3 eingegebenen Fahrziel. Fahranweisungen, so z.B. Anweisungen, wann ein Fahrer abbiegen muss, werden über eine Anzeigeeinheit 7 und/oder über einen Lautsprecher 9 an den Fahrer des Fahrzeugs ausgegeben. In der Anzeigeeinheit 7 werden die Fahranweisungen in Textform und über den Lautsprecher 9 in Sprachform als gesprochener Text ausgegeben. Über den GPS-Empfänger 5 und über Fahrzeugsensoren 10, wie z.B. Wegesensoren oder Drehratensensoren, wird eine aktuelle Position des Fahrzeugs während der Fahrt fortwährend bestimmt und entsprechend der aktuellen Position werden die Fahranweisungen ausgegeben. In einer bevorzugten Ausgestaltung wird dabei über einen Blinkerhebelsensor 11 eine Betätigung des Blinkerhebels 12 und damit eine Aktivierung einer in der Figur 1 nicht gezeigten Richtungsanzeige des Fahrzeugs von der Navigationsvorrichtung 1 ermittelt. Über den GPS-Empfänger 5 und/oder die Fahrzeugsensoren 10 kann dabei erfasst werden, ob das Fahrzeug sich noch auf der von der Recheneinheit 2 der Navigationsvorrichtung 1 berechneten Fahrtroute befindet. Ebenso kann über den Blinkerhebelsensor 11 festgestellt werden, ob der Blinkerhebel 12 gemäß der über die Anzeigeeinheit 7 und/oder den Lautsprecher 9 ausgegebenen Fahranweisungen betätigt wird.

In der Figur 2 ist ein erstes Ausführungsbeispiel für ein erfindungsgemäßes Verfahren dargestellt. In einem Routenberechnungsschritt 20 wird zunächst eine Fahrtroute von einer über den GPS-Empfänger und/oder die Fahrzeugsensoren 10 ermittelten Startposition zu einem über die Eingabeeinheit 3 eingegebenen Fahrziel berechnet. Hierbei werden insbesondere Fahranweisungen bestimmt, die an verschiedenen Punkten der berechneten Fahrtroute ausgegeben werden, z.B. an Kreuzungen oder an Abfahrten von einer Strasse, wobei einem Fahrer mitgeteilt wird, in welche Richtung er abbiegen soll bzw. ob der Fahrer auf der gewählten Strasse bleiben soll. An den Routenberechnungsschritt 20 schließt sich ein Ausgabeschritt 21 an, in dem ein erster Fahrhinweis an den Fahrer ausgegeben wird. Nach Ausgabe des Fahrhinweises in dem Ausgabeschritt 21 wird zu dem Überprüfungsschritt 22 verzweigt, in dem überprüft wird, ob ein Fahrer der zuvor berechneten Fahrtroute bis zu dem nächsten Ausgabepunkt eines Fahrhinweises folgt. Ist der Fahrer der berechneten Fahrtroute bis zu dem nächsten Ausgabepunkt gefolgt, so wird von dem Überprüfungsschritt 22 zu dem Ausgabeschritt 21 zurückverzweigt und es wird der nächste Fahrhinweis ausgegeben. Ist das Fahrziel erreicht, so wird das Verfahren mit der Ausgabe beendet, dass das Ziel erreicht wurde. beendet. Wird in dem Überprüfungsschritt 22 jedoch festgestellt, dass der Fahrer die zuvor berechnete Fahrtroute verlassen hat, so wird zu einem anschließenden Warnschritt 23 verzweigt, in dem ein Fahrer optisch und/oder akustisch über die Anzeigeeinheit 7 und/oder den Lautsprecher 9 auf ein Verlassen der zuvor berechneten Fahrtroute hingewiesen wird. Der Fahrer hat nun eine Möglichkeit, z.B. über eine Drucktaste 8 der Eingabeeinheit 3, der Navigationsvorrichtung 1 mitzuteilen, dass er die zuvor berechnete Fahrtroute unabsichtlich verlassen hat. In diesem Fall wird von dem Warnschritt 23 zu dem Rückführungsschritt 25 verzweigt, in dem eine Fahrtroute für eine Rückführung auf die zuvor berechnete Fahrtroute berechnet wird. Anschließend wird zu dem Ausgabeschritt 21 verzweigt, in dem eine entsprechende Fahranweisung ausgegeben wird. Der Fahrer fährt dann auf der ursprünglich berechneten Fahrtroute weiter. Wird dagegen von dem Fahrer innerhalb eines vorgegebenen Zeitraums, z.B. zehn Sekunden nach Ertönen einer Warnung keine Eingabe vorgenommen, so wird zu einem Sperr- und Berechnungsschritt 24 weiterverzweigt. In dem Sperr- und Berechnungsschritt 24 wird ein nächster, dem aktuell befahrenen Abschnitt folgender Abschnitt der vorher berechneten Fahrtroute gesperrt. Bei einer Autobahn kann dies z.B. die Strecke bis zu einer nächsten oder übernächsten Autobahnausfahrt sein. Vorzugsweise ist bereits zu jeder Autobahnausfahrt ein solcher Sperrabschnitt in der in der Speichereinheit 6 abgelegten digitalen Karte gespeichert. In einem innerstädtischen Bereich kann ein derartiger Abschnitt eine Fahrtstrecke sein, die zumindest einen Kilometer der berechneten Fahrtroute umfaßt. Eine Berechnung eines Sperrabschnitts gemäß dem Sperr- und Berechnungsschritt 24 kann dabei bereits vor Ablauf der oben genannten Zeitdauer in der Navigationsvorrichtung 1 gestartet werden. Ferner . wird eine Umfahrungsstrecke für den gesperrten Abschnitt der zuvor berechneten Route ermittelt. Insbesondere bei einem gesperrten Autobahnabschnitt wird hierbei für die Berechnung der Streckenwiderstand einer ausgeschilderten Umfahrungsstrecke erhöht, so z.B. in Deutschland die mit "U" und einer Nummer bezeichneten Umfahrungsstrecken der Autobahnen, indem die für diese Strecken in der in der Speichereinheit 6 gespeicherten digitalen Karte festgelegten Durchschnittsgeschwindigkeiten z.B. um 2/3 des gespeicherten Werts reduziert werden. Mit der Berechnung der neuen Fahrtroute werden auch neue Fahranweisungen festgelegt. Im Anschluss an den Berechnungsschritt 24 wird wieder zu dem Ausgabeschritt 21 zurückverzweigt und der erste Fahrhinweis der nun zu fahrenden Fahrtroute, die sich aus der Umfahrung des zu meidenden Streckenabschnitts und einer Reststrecke der zuvor berechneten Fahrtroute bis zu dem Fahrziel zusammensetzt, wird ausgegeben.

In der Figur 3 ist ein erfindungsgemäßes Ausführungsbeispiel für eine Erfassung dargestellt, ob die zuvor berechnete.Route absichtlich oder unabsichtlich verlassen wird. Das in der Figur 3 dargestellte Verfahren ersetzt den Überprüfungsschritt 22 gemäß der Figur 2.

An den Ausgabeschritt 21, der in der Figur 3 gestrichelt dargestellt ist, schließt ein erster Prüfschritt 31 an, in dem überprüft wird, ob der in dem Ausgabeschritt 21 zuvor ausgegebene Fahrhinweis ein Abbiegen des Fahrers verlangt. Ist dies der Fall, so wird zu einem zweiten Prüfschritt 32 verzweigt. Durch die gestrichelte Darstellung soll deutlich werden, dass dieser Bestandteil des Verfahrens gleich einem bereits zu der Figur 2 erläuterten Verfahrensbestandteil ist. In dem zweiten Prüfschritt 32 wird anhand einer Auswertung des Blinkerhebelsensors 11 überprüft, ob der Blinkerhebel 12 betätigt wurde. Ist dies der Fall, so wird zu einem dritten Prüfschritt 33 verzweigt, in dem überprüft wird, ob der Blinkerhebel 12 in die richtige Richtung betätigt wurde. Ist dies der Fall, so ist davon auszugehen, dass der Fahrer der Fahranweisung folgt und richtig abbiegt. Daher wird in diesem Fall von dem dritten Prüfschritt 33 wieder zu dem Ausgabeschritt 21 verzweigt, und der nächste Fahrhinweis wird in dem Ausgabeschritt 21 ausgegeben.

Wird in dem dritten Prüfschritt 33 dagegen festgestellt, dass der Blinkerhebel 12 in eine andere Richtung betätigt wird, als es der in dem Ausgabeschritt 21 ausgegebene Fahrhinweis verlangt, wird zu einem ersten Warnschritt 34 verzweigt. In dem ersten Warnschritt 34 wird ein Fahrer darauf hingewiesen, dass er im Begriff ist, die zuvor berechnete Fahrtroute durch ein falsches Abbiegen zu verlassen.

Wird in dem ersten Prüfschritt 31 festgestellt, dass der in dem Ausgabeschritt 21 zuvor ausgegebene Fahrhinweis kein Abbiegen verlangt, so wird zu einem vierten Prüfschritt 35 verzweigt. In dem vierten Prüfschritt 35 wird anhand einer Auswertung des Blinkerhebelsensors 11 überprüft, ob der Blinkerhebel 12 betätigt wird. Ist dies nicht der Fall, so ist davon auszugehen, dass der Fahrer der Fahranweisung folgt. Es wird zu dem Ausgabeschritt 21 verzweigt, um an der entsprechenden Position des Fahrzeugs den nächsten Fahrhinweis auszugeben. Wird in dem vierten Prüfschritt 35 jedoch festgestellt, dass der Blinkerhebel 12 dennoch betätigt wird, so wird ebenfalls zu dem ersten Warnschritt 34 verzweigt.

Im Anschluß an den ersteh Warnschritt 34 wird in einem fünften Prüfschritt 36 überprüft, ob der Blinker nun durch den Fahrer entsprechend der zuvor berechneten Fahrtroute korrigiert wurde. Ist dies der Fall, so ist der Fahrer auf die zuvor berechnete Fahrtroute zurückgekehrt und hatte lediglich den Blinker falsch gesetzt. Daher wird zu dem Ausgabeschritt 21 verzweigt und die nächste Fahranweisung wird an der entsprechenden Position des Fahrzeugs ausgegeben. Wird dagegen die Stellung des Blinkerhebels 12 durch den Fahrer nicht korrigiert, so ist von einem absichtlichen Verlassen der zuvor berechneten Fahrtroute auszugehen. Daher wird zu dem Warnschritt 23 gemäß der Figur 2 verzweigt.

Wird in dem zweiten Prüfschritt festgestellt, dass ein Blinker nicht gesetzt ist, so wird zu einem zweiten Warnschritt 37 verzweigt, in dem ein Fahrer darauf hingewiesen wird, den Blinker gemäß der Fahranweisung zu setzen. In einem anschließenden sechsten Prüfschritt 38 wird überprüft, ob ein Blinker gesetzt ist. Ist dies der Fall, so wird zu dem dritten Prüfschritt 33 verzweigt. Wird immer noch kein Blinker gesetzt, so ist anzunehmen, dass der Fahrer wohl nicht abbiegen will und damit die zuvor berechnete Fahrtroute verlassen will. Daher wird von dem sechsten Prüfschritt 38 auch in diesem Fall zu dem ersten Warnschritt 34 verzweigt.

## Patentansprüche

1. Verfahren zur Beeinflussung einer Fahrtroutenführung eines Fahrzeugs, wobei ein Verlassen einer berechneten Fahrtroute erfasst wird, wobei automatisch ein zu meidender Streckenabschnitt der berechneten Fahrtroute festgelegt wird und wobei eine neue Fahrtroute für eine Umfahrung des zu meidenden Streckenabschnitts berechnet wird, **dadurch gekennzeichnet, dass** ein Verlassen der berechneten Fahrtroute durch eine Auswertung einer Betätigung einer Richtungsanzeige des Fahrzeugs ermittelt wird.

2. Verfahren nach Anspruch 1, **dadurch gekennzeichnet, dass** ein Verlassen der berechneten Fahrtroute durch einen Vergleich einer Fahrzeugposition mit der berechneten Fahrtroute ermittelt wird.

3. Verfahren nach einem der vorhergehenden Ansprüche, **dadurch gekennzeichnet, dass** überprüft wird, ob ein unabsichtliches Verlassen der berechneten Fahrtroute vorliegt, nachdem ein Verlassen der berechneten Fahrtroute ermittelt wurde.

4. Verfahren nach Anspruch 3, **dadurch gekennzeichnet, dass** ein unabsichtliches Verlassen der berechneten Fahrtroute mittels einer Auswertung einer Betätigung einer Taste (8) ermittelt wird.

5. Verfahren nach Anspruch 3, **dadurch gekennzeichnet, dass** ein unabsichtliches Verlassen der berechneten Fahrtroute dann ermittelt wird, wenn die Stellung eines Blinkerhebels (12) entsprechend der zuvor berechneten Fahrtroute korrigiert wurde.

6. Verfahren nach einem der vorhergehenden Ansprüche, **dadurch gekennzeichnet, dass** bei einem ermittelten Verlassen der Fahrtroute eine optische und/oder akustische Warnung ausgegeben wird.

7. Verfahren nach einem der vorhergehenden Ansprüche, **dadurch gekennzeichnet, dass** nach einer Erfassung eines absichtlichen Verlassens der berechneten Fahrtroute eine direkte Rückführung auf die ursprüngliche Fahrtroute deaktiviert wird.

8. Verfahren nach einem der vorhergehenden Ansprüche, **dadurch gekennzeichnet, dass** bei der Berechnung der Umfahrung des zu meidenden Streckenabschnitts ausgeschilderte Umfahrungsstrecken gemieden werden.

9. Verfahren nach Anspruch 8, **dadurch gekennzeichnet, dass** die Streckenwiderstände für ausgeschilderte Umfahrungsstrecken erhöht werden.

10. Verfahren nach einem der vorhergehenden Ansprüche, **dadurch gekennzeichnet, dass** das Fahrzeug wieder auf die berechnete Route zurückgeführt wird, wenn eine Korrektur eines absichtlichen Verlassens der berechneten Fahrtroute erfasst wird.

11. Vorrichtung zur Beeinflussung einer Fahrtroutenführung zur Durchführung des Verfahrens nach einem der vorhergehenden Ansprüche, mit einer Navigationsvorrichtung (1) zur Berechnung einer Fahrtroute zu einem Fahrziel, und mit einem Blinkerhebelsensor (11) zur Erfassung einer Betätigung einer Richtungsanzeige des Fahrzeugs, wobei ein Verlassen einer berechneten Fahrtroute durch eine Auswertung einer Betätigung der Richtungsanzeige des Fahrzeugs ermittelt wird, wobei automatisch ein zu meidender Streckenabschnitt der berechneten Fahrtroute festgelegt wird und wobei eine neue Fahrtroute für eine Umfahrung des zu meidenden Streckenabschnitts von der Navigationsvorrichtung (1) berechnet wird.

## Claims

1. Method for influencing the routing of a vehicle, a departure from a calculated route being sensed, a part of the calculated route which is to be avoided being automatically defined and a new route for bypassing the part of the route which is to be avoided being calculated, **characterized in that** a departure from the calculated route is determined by evaluating an activation of a direction indicator of the vehicle.

2. Method according to Claim 1, **characterized in that** a departure from the calculated route is determined by comparing a position of the vehicle with the calculated route.

3. Method according to one of the preceding claims, **characterized in that** after a departure from the calculated route has been determined it is checked whether an unintentional departure from the calculated route has occurred.

4. Method according to Claim 3, **characterized in that** an unintentional departure from the calculated route is determined by evaluating an activation of a pushbutton key (8).

5. Method according to Claim 3, **characterized in that** an unintentional departure from the calculated route is determined if the position of a direction indicator lever (12) has been corrected in accordance with the previously calculated route.

6. Method according to one of the preceding claims, **characterized in that**, when a departure from the route is determined, a visual and/or audible warning is issued.

7. Method according to one of the preceding claims, **characterized in that**, after an intentional departure from the calculated route has been sensed, a means of routing directly back to the original route is deactivated.

8. Method according to one of the preceding claims, **characterized in that** when the bypassing of the part of the route which is to be avoided is calculated, bypass routes which are indicated by road signs are avoided.

9. Method according to Claim 8, **characterized in that** the route resistances for bypass routes which are indicated by road signs are increased.

10. Method according to one of the preceding claims, **characterized in that** the vehicle is routed back to the calculated route if a correction of an intentional departure from the calculated route is sensed.

11. Device for influencing routing for carrying out the method according to one of the preceding claims, having a navigation device (1) for calculating a route to a destination, and having a direction indicator lever sensor (11) for sensing an activation of a direction indicator of the vehicle, a departure from a calculated route being determined by evaluating an activation of the direction indicator of the vehicle, a part of the calculated route which is to be avoided being defined automatically and a new route for bypassing the part of the route which is to be avoided being calculated by the navigation device (1).

## Revendications

1. Procédé pour influencer un guidage d'itinéraire d'un véhicule, selon lequel on détecte une sortie d'un itinéraire calculé, un segment d'itinéraire à éviter dans l'itinéraire calculé étant automatiquement déterminé et un nouvel itinéraire étant calculé pour contourner le segment d'itinéraire à éviter,
**caractérisé en ce que**
on détermine une sortie de l'itinéraire calculé en exploitant un actionnement d'une indication de direction du véhicule.

2. Procédé selon la revendication 1,
**caractérisé en ce qu'**
on détermine une sortie de l'itinéraire calculé en comparant une position de véhicule et l'itinéraire calculé.

3. Procédé selon l'une des revendications précédentes,
**caractérisé en ce qu'**
après avoir déterminé une sortie de l'itinéraire calculé, on vérifie si on est en présence d'une sortie non délibérée de l'itinéraire calculé.

4. Procédé selon la revendication 3,
**caractérisé en ce qu'**
on détermine une sortie non délibérée de l'itinéraire calculé au moyen d'une évaluation d'un actionnement d'une touche (8).

5. Procédé selon la revendication 3,
**caractérisé en ce qu'**
on détermine une sortie non délibérée de l'itinéraire calculé lorsque la position d'un levier clignotant (12) est corrigée conformément à l'itinéraire calculé auparavant.

6. Procédé selon l'une des revendications précédentes,
**caractérisé en ce qu'**
lorsqu'une sortie de l'itinéraire a été déterminée, un avertissement optique et/ou sonore est généré.

7. Procédé selon l'une des revendications précédentes,
**caractérisé en ce qu'**
après avoir détecté une sortie délibérée de l'itinéraire calculé, un ré-acheminement direct sur l'itinéraire calculé à l'origine est désactivé.

8. Procédé selon l'une des revendications précédentes,
**caractérisé en ce qu'**
en calculant le contournement du segment d'itinéraire à éviter, on évite des itinéraires de déviation signalés.

9. Procédé selon la revendication 8,
**caractérisé en ce qu'**
on augmente les restrictions d'itinéraires pour des itinéraires de déviation signalés.

10. Procédé selon l'une des revendications précédentes,
**caractérisé en ce que**
le véhicule est redirigé sur l'itinéraire calculé lorsqu'une correction d'une sortie délibérée de l'itinéraire calculé est détectée.

11. Dispositif pour influencer une conduite d'itinéraire permettant de mettre en oeuvre le procédé selon l'une des revendications précédentes, comprenant un dispositif de navigation (1) pour calculer un itinéraire jusqu'à une destination et un capteur de levier clignotant (11) pour détecter un actionnement d'une indication de direction du véhicule,
dans lequel on détermine une sortie d'un itinéraire calculé en exploitant une évaluation d'un actionnement de l'indication de direction du véhicule, un segment d'itinéraire à éviter dans l'itinéraire calculé étant automatiquement déterminé et un nouvel itinéraire pour contourner le segment d'itinéraire à éviter étant calculé par le dispositif de navigation (1).
